Europäisches Patentamt

European Patent Office

Office européen des brevets

(11) Veröffentlichungsnummer: **0 137 860**
**A1**

(12) # EUROPÄISCHE PATENTANMELDUNG

(21) Anmeldenummer: 83109908.0

(51) Int. Cl.⁴: **B 29 C 63/06**

(22) Anmeldetag: 04.10.83

(43) Veröffentlichungstag der Anmeldung: 24.04.85
Patentblatt 85/17

(84) Benannte Vertragsstaaten: **AT BE CH DE FR GB IT LI NL SE**

(71) Anmelder: **Helling Kunststoffwerk GmbH & Co.,
Schluchtweg 6, D-4517 Hilter (DE)**

(72) Erfinder: **Helling, Wilhelm, Schluchtweg 2, D-4527 Hilter (DE)**

(74) Vertreter: **Goddar, Heinz J., Dr. et al, FORRESTER & BOEHMERT Widenmayerstrasse 4/I,
D-8000 München 22 (DE)**

(54) Ummantelungsmaschine zum Aufbringen von Folie auf ein Kunststoffprofil.

(57) Ummantelungsmaschine zum Aufbringen von Folien auf ein extrudiertes Kunststoffprofil, mit Sprühpistolen zum Aufbringen eines Primers auf das Kunststoffprofil, einer Heißlufteheizung zur Primeraktivierung und -trocknung und Andruckrollen zum Andrücken der Folie auf das Kunststoffprofil wobei

– die Sprühpistolen (14) zum Aufbringen des Primers gegen die Bewegungsrichtung der Kunststoffprofile (10) ausgerichtet sind,

– die Heißluftheizung zur Primeraktivierung und -trocknung als klauenartige Heißluft-Blaseinrichtung (16) ausgestaltet ist,

– Führungsrollen (20) zur steuerbaren Führung der Folie auf das Profil (10) vorgesehen sind, und

– die Andrückrollen (22) mit einem weichen Material belegt sein.

0137860

FB 659

Fa. Helling Kunststoffwerk GmbH & Co., Schluchtweg 6,
4517 Hilter

------------------------------------------------------------

Ummantelungsmaschine zum Aufbringen von Folie auf ein
Kunststoffprofil

------------------------------------------------------------

Die Erfindung betrifft eine Ummantelungsmaschine zum
Aufbringen von Folie auf ein extrudiertes Kunststoffprofil, mit Sprühpistolen zum Aufbringen eines Primers
auf das Kunststoffprofil, einer Heißluftheizung zur
Primeraktivierung und -trocknung und Andruckrollen zum
Andrücken der Folie auf das Kunststoffprofil.

Ummantelungsmaschinen zum Aufbringen von Folie auf ein
Kunststoffprofil sind bekannt. Sie dienen dazu, ein
extrudierte Kunststoffprofil in einem zweiten Arbeitsgang zu ummanteln bzw. zu beschichten. Bei den bekannten Ummantelungsmaschinen wird diese Ummantelung in einem zweiten Arbeitsgang durchgeführt, nachdem das kontinuierlich extrudierte Kunststoffprofil auf die jeweilige Länge geschnitten worden ist.

Die bekannten Maschinen haben den Nachteil, daß die zugeschnittenen Kunststoffprofile zu der Ummantelungsmaschine transportiert und vor Aufbringen der Folie gereinigt werden müssen, da die Ansammlung von Schmutz auf dem frisch extrudierten, zugeschnittenen Kunststoffprofil nicht vermieden werden kann.

Der Erfindung liegt die Aufgabe zugrunde, eine Ummantelungsmaschine zum Aufbringen von Folien auf Kunststoffprofile der eingangs genannten Art zu schaffen, bei der die Folie möglichst kurz nach Extrusion des Kunststoffprofils, also vor einer etwaigen Verschmutzung, aufgebracht werden kann.

Erfindungsgemäß wird diese Aufgabe dadurch gelöst, daß die Sprühpistolen zum Aufbringen des Primers gegen die Bewegungsrichtung des Kunststoffprofils ausgerichtet sind, die Heißluftheizung zur Primeraktivierung und -trocknung als klauenartige Heißluft-Blaseinrichtung ausgestaltet ist, Führungsrollen zur steuerbaren Führung der Folie auf das Profil vorgesehen sind, und die Andruckrollen mit einem weichen Material belegt sind.

Dabei sollen wenigstens vier Sprühpistolen, vorzugsweise sechs Sprühpistolen vorgesehen sein.

Die Sprühpistolen dienen dazu, einen als "Primer" bezeichneten Haftvermittler aufzubringen. Dem zu extrudierenden Kunststoffmaterial nämlich sind Gleitmittel zugegeben, welche einem Verkleben der Extrusionsdüse entgegenwirken. Diese auf der Oberfläche des extrudierten Kunststoffprofils verbleibenden Gleitmittel wirken sich negativ auf den Verbund zwischen Klebstoff und Profil aus; der Primer neutralisiert diese Gleitmittel, so daß der Klebstoff der Folie auf dem Kunststoffprofil ausreichend gut haftet.

Es hat sich gezeigt, daß bei Ausrichten der Sprühpistolen gegen die Bewegungsrichtung des Kunststoffprofils und bei einer ausreichend hohen Zahl von Sprühpistolen, nämlich mindestens vier, vorzugsweise aber sechs Sprühpistolen, Abdeckleisten in der Primerstation, die die Profilteile vor der Besprühung mit dem Primer schützen sollen, die nicht zu beschichten sind, nicht erforderlich sind. Vielmehr lassen sich diese Sprühpistolen bei der erfindungsgemäßen Ausrichtung derart steuern, daß nur die Bereiche des Profils mit einem Primer beschichtet werden, die anschließend mit der Folie ummantelt werden sollen.

Die erfindungsgemäß vorgeschlagene Ausgestaltung der Heißluftbeheizung zur Primeraktivierung und -trocknung als klauenartige Heißluft-Blaseinrichtung ermöglicht ein schnelles und zuverlässiges Aktivieren und Trocknen des aufgebrachten Primers, so daß die Folie schon eine kurze Strecke hinter der Heißluftbeheizung, also unmittelbar nach Aktivierung und Trocknung des Primers, mit der Folie ummantelt werden kann.

Die weiter vorgesehene steuerbare Führung der Folie mittels besonderer Führungsrollen je nach der Breite des zu ummantelnden Kunststoffprofils ermöglicht es, die Vorratsrolle für die Folie ortsfest zu halten und durch eine einfache Mechanik ein exaktes Anlegen der Folie auf das Kunststoffprofil unabhängig von deren Breite zu gewährleisten.

Das Belegen der Andruckrollen mit einem relativ weichen Material hat zur Folge, daß Planunebenheiten im Profil, die grundsätzlich nicht ganz zu vermeiden sind, aufgefangen werden können, wodurch das Entstehen nicht richtig klebender "Blasen" verhindert wird. Es hat sich nämlich gezeigt, daß bei der erfindungsgemäßen Ausgestaltung der Ummantelungsmaschine ein festes Aufpressen der Folie auf das Kunststoffprofil, wie es bei den bisher bekannten Ummantelungsmaschinen mit einem harten Belag der Andrückrollen üblich war, nicht erforderlich ist.

Die weiter vorgeschlagene Einrichtung zum intermittierenden Unterbrechen des Spritzvorgangs bewirkt, daß einem Verstopfen der Sprühpistole durch Ansammlungen von Partikeln an der Düse entgegengewirkt wird.

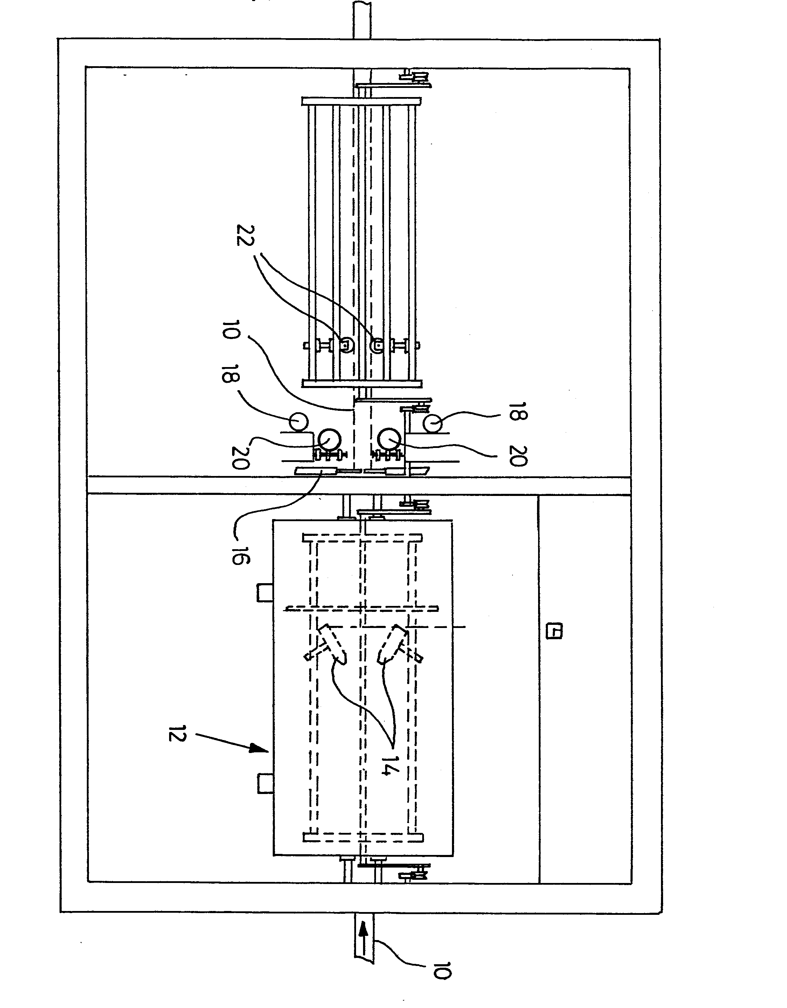

Weitere Merkmale und Vorteile der Erfindung ergeben sich aus der Zeichnung. Deren einzige Figur zeigt die erfindungsgemäß ausgestaltete Ummantelungsmaschine.

Das extrudierte Kunststoffprofil 10 wird in eine Kammer 12 eingeführt, die mit einer Vielzahl (vorzugsweise sechs) Sprühpistolen 14 versehen ist, welche gegen die durch den Pfeil angedeutete Bewegungsrichtung des Kunststoffprofils 10 ausgerichtet sind. Nach Aufbringen des Primers mittels dieser Sprühpistolen 14 gelangt das kontinuierlich extrudierte Kunststoffprofil 10 in den Bereich zwischen der klauenartigen Heißluft-Blaseinrichtung 16, aus der heiße Luft von allen Seiten gegen das mit dem Primer beschichtete Kunststoffprofil 10 geblasen wird. Der Primer wird durch die heiße Luft aktiviert und getrocknet. Unmittelbar anschließend wird die Folie auf das Kunststoffprofil 10 aufgebracht, wobei dieses von Vorratsrollen 18 abgezogen und mittels entsprechend der Breite des Kunststoffprofils verstellbaren Führungsrollen 20 an das Kunststoffprofil herangeführt wird. Anschließend wirken mit einer weichen Belegung versehene Andruckrollen 22 auf die Folie und drücken diese mit sanftem Preßdruck gegen das Kunststoffprofil.

Es hat sich gezeigt, daß bei der erfindungsgemäßen Ausgestaltung einer Ummantelungsmaschine die aufzubringende Folie in demselben Arbeitsgang wie deren Extrusion, also vor Zersägen des Kunststoffprofils, durchgeführt werden kann. Die Vorteile eines derartigen Arbeitsverfahrens sind offenbar, insbesondere kann dabei auch auf das ansonsten zwingend erforderliche Säubern des Kunststoffprofils vor Aufbringen der Folie verzichtet werden.

Ansprüche
==================

1. Ummantelungsmaschine zum Aufbringen von Folie auf ein extrudiertes Kunststoffprofil, mit Sprühpistolen zum Aufbringen eines Primers auf das Kunststofprofil, einer Heißluftheizung zur Primeraktivierung und -trocknung und Andruckrollen zum Andrücken der Folie auf das Kunststoffprofil, dadurch gekennzeichnet, daß

- die Sprühpistolen (14) zum Aufbringen des Primers gegen die Bewegungsrichtung der Kunststoffprofile (10) ausgerichtet sind,

- die Heißluftheizung zur Primeraktivierung und -trocknung als klauenartige Heißluft-Blaseinrichtung (16) ausgestaltet ist,

- Führungsrollen (20) zur steuerbaren Führung der Folie auf das Profil (10) vorgesehen sind, und

- die Andruckrollen (22) mit einem weichen Material belegt sind.

2. Ummantelungsmaschine nach Anspruch 1, dadurch gekennzeichnet, daß mindestens vier Sprühpistolen (14) vorgesehen sind.

3. Ummantelungsmaschine nach Anspruch 2, dadurch gekennzeichnet, daß sechs Sprühpistolen (14) vorgesehen

0137860

sind.

4. Ummantelungsmaschine nach einem oder mehreren der vorangehenden Ansprüche, gekennzeichnet durch eine Einrichtung zum intermittierenden Unterbrechen des Sprühvorgangs.

- 8 -

0137860

## Bezugszeichenliste
==================

| 10 | Kunststoffprofil | 10 |
|----|------------------|----|
| 12 | Kammer | 12 |
| 14 | Sprühpistolen | 14 |
| 16 | Heißluft-Blaseinrichtung | 16 |
| 18 | Vorratsrolle | 18 |
| 20 | Führungsrolle | 20 |
| 22 | Andrückrollen | 22 |

0137860

## Europäisches Patentamt

## EUROPÄISCHER RECHERCHENBERICHT

0137860
Nummer der Anmeldung

EP 83 10 9908

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 225 681 (PONT-A-MOUSSON) * Figur * | 1 | B 29 C 63/06 |
| A | FR-A-2 057 264 (CASTELLI) * Seite 2, Zeilen 24-34 * | 1,3 | |
| A | DE-A-2 731 657 (FRIZ) * Seite 10, Zeilen 10-16 * | 1 | |
| A | FR-A-2 333 627 (PASCHE) | 1 | |

RECHERCHIERTE SACHGEBIETE (Int. Cl.4)

B 29 C
B 05 D
B 05 B
F 16 L

Der vorliegende Recherchenbericht wurde für alle Patentansprüche erstellt.

| Recherchenort DEN HAAG | Abschlußdatum der Recherche 13-06-1984 | Prüfer RIS M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82